(19)

Europäisches Patentamt

European Patent Office

Office européen des brevets

(11) **EP 4 218 964 A1**

(12) **EUROPEAN PATENT APPLICATION**

(43) Date of publication:
**02.08.2023 Bulletin 2023/31**

(21) Application number: **23151354.0**

(22) Date of filing: **12.01.2023**

(51) International Patent Classification (IPC):
**A63B 37/00** (2006.01)     A63B 47/00 (2006.01)
**A63B 24/00** (2006.01)

(52) Cooperative Patent Classification (CPC):
**A63B 37/0018; A63B 37/0016; A63B 37/0084;**
A63B 37/0006; A63B 37/0012; A63B 37/0019;
A63B 37/002; A63B 47/008; A63B 2024/0034

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.01.2022 JP 2022013357**

(71) Applicant: **Sumitomo Rubber Industries, Ltd.
Kobe-shi, Hyogo 651-0072 (JP)**

(72) Inventors:
• **SAJIMA, Takahiro
Kobe-shi, 651-0072 (JP)**
• **KOJIMA, Daijiro
Kobe-shi, 651-0072 (JP)**

(74) Representative: **Manitz Finsterwald
Patent- und Rechtsanwaltspartnerschaft mbB
Martin-Greif-Strasse 1
80336 München (DE)**

(54) **GOLF BALL**

(57)     A golf ball 2 having excellent flight performance upon a shot with a utility club is provided. The golf ball 2 has a large number of dimples 8 on a surface thereof. A trajectory of the golf ball 2 calculated under conditions of an initial speed of 260 ft/s, a launch angle of 15.0 degrees, and an initial backspin rate of 3000 rpm satisfies the following mathematical formula,

$$Amax \geq 4.0 * Vave + 13.10,$$

wherein Amax represents a maximum value (degree) of a vector angle A in the trajectory, and Vave represents an average volume (mm$^3$) of the dimples 8. The vector angle A is calculated by the following mathematical formula.

$$A = ATAN(Vy / Vx),$$

wherein Vx represents a horizontal component of a speed of the golf ball 2, and Vy represents a vertical component of the speed of the golf ball 2.

Fig.5

EP 4 218 964 A1

**Description**

BACKGROUND OF THE INVENTION

Field of the Invention

The present specification discloses a golf ball having a large number of dimples on the surface thereof.

Background Art

Golf balls have a large number of dimples on the surfaces thereof. The dimples disturb the air flow around the golf ball during flight to cause turbulent flow separation. This phenomenon is referred to as "turbulization". Due to turbulization, separation points of the air from the golf ball shift backwards leading to a reduction of drag. The turbulization promotes the displacement between the separation point on the upper side and the separation point on the lower side of the golf ball, which results from the backspin, thereby enhancing the lift force that acts upon the golf ball. The reduction of drag and the enhancement of lift force are referred to as a "dimple effect". Excellent dimples efficiently disturb the air flow. Excellent dimples produce a large flight distance.

An interest to golf players concerning golf balls is flight performance. Golf players prefer a golf ball with which a flight distance is large when the golf ball is hit with a driver (W#1). Japanese Laid-Open Patent Publication No. 2014-140638 discloses a golf ball with which a large flight distance can be achieved upon a shot with a driver.

Golf players frequently use utility clubs for tee shots on par-three holes. Golf players also frequently use utility clubs for second shots on long-distance holes. Golf players are also interested in a flight distance upon hitting with a utility club.

It is an intention of the applicant to provide a golf ball having excellent flight performance when being hit with a utility club.

SUMMARY OF THE INVENTION

A golf ball according to an embodiment has a plurality of dimples on a surface thereof. A trajectory calculated using a drag coefficient CD and a lift force coefficient CL obtained in an indoor test range which is a rule set by the United States Golf Association, on the basis of a model proposed by S. J. Quintavalla of the United States Golf Association and disclosed in "Science and Golf IV, Chapter 30, A Generally Applicable Model for the Aerodynamic Behavior of Golf Balls" published in 2002, by a program created in accordance with a manual provided by the United States Golf Association, under conditions of an initial speed of 260 ft/s, a launch angle of 15.0 degrees, and an initial backspin rate of 3000 rpm, satisfies the following mathematical formula,

$$Amax \geq 4.0 * Vave + 13.10,$$

wherein Amax represents a maximum value (degree) of a vector angle A in the trajectory, and Vave represents an average volume (mm$^3$) of the dimples. The vector angle A is calculated by the following mathematical formula,

$$A = ATAN(Vy / Vx),$$

wherein Vx represents a horizontal component of a speed of the golf ball, and Vy represents a vertical component of the speed of the golf ball.

This golf ball has excellent flight performance upon a shot with a utility club.

BRIEF DESCRIPTION OF THE DRAWINGS

FIG. 1 is a cross-sectional view schematically showing a golf ball according to an embodiment;
FIG. 2 is an enlarged plan view showing the golf ball in FIG. 1;
FIG. 3 is a front view showing the golf ball in FIG. 2;
FIG. 4 is an enlarged cross-sectional view showing a part of the golf ball in FIG. 1;
FIG. 5 is a graph showing a relationship between an average volume of dimples and a maximum vector angle of the golf ball in FIG. 1;
FIG. 6 is a plan view showing a golf ball of Example 3; and
FIG. 7 is a front view showing the golf ball in FIG. 6.

DETAILED DESCRIPTION

Hereinafter, preferred embodiments will be described in detail with appropriate reference to the drawings.

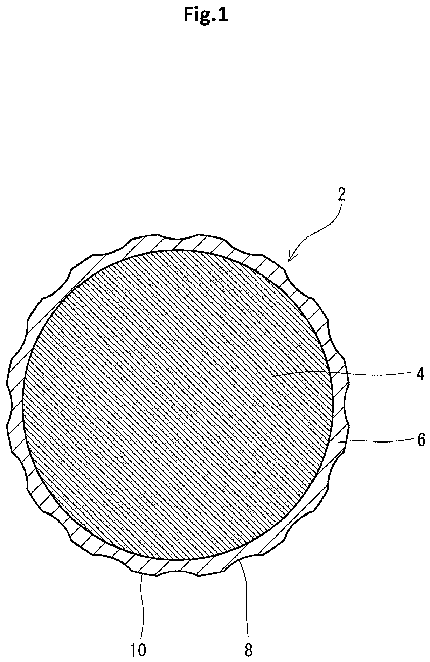

A golf ball 2 shown in FIG. 1 includes a spherical core 4 and a cover 6 positioned outside the core 4. The golf ball 2 has a large number of dimples 8 on the surface thereof. Of the surface of the golf ball 2, a part other than the dimples 8 is a land 10. The golf ball 2 includes a paint layer and a mark layer on the external side of the cover 6, but these layers are not shown in the drawing. The golf ball 2 may have one or more mid layers between the core 4 and the cover 6.

The golf ball 2 preferably has a diameter of not less than 40 mm and not greater than 45 mm. From the viewpoint of conformity to the rules established by the United States Golf Association (USGA), the diameter is particularly preferably not less than 42.67 mm. From the viewpoint of suppression of air resistance, the diameter is more preferably not greater than 44 mm and particularly preferably not greater than 42.80 mm.

The golf ball 2 preferably has a mass of not less than 40 g and not greater than 50 g. From the viewpoint of attainment of great inertia, the mass is more preferably not less than 44 g and particularly preferably not less than 45.00 g. From the viewpoint of conformity to the rules established by the USGA, the mass is particularly preferably not greater than 45.93 g.

The core 4 is formed by crosslinking a rubber composition. Examples of the base rubber of the rubber composition include polybutadienes, polyisoprenes, styrene-butadiene copolymers, ethylene-propylene-diene copolymers, and natural rubbers. Two or more rubbers may be used in combination. From the viewpoint of resilience performance, polybutadienes are preferable, and high-cis polybutadienes are particularly preferable.

The rubber composition of the core 4 includes a co-crosslinking agent. Preferable co-crosslinking agents from the viewpoint of resilience performance are zinc acrylate, magnesium acrylate, zinc methacrylate, and magnesium methacrylate. The rubber composition preferably includes an organic peroxide together with a co-crosslinking agent. Examples of preferable organic peroxides include dicumyl peroxide, 1,1-bis(t-butylperoxy)-3,3,5-trimethylcyclohexane, 2,5-dimethyl-2,5-di(t-butylperoxy)hexane, and di-t-butyl peroxide.

The rubber composition of the core 4 may include additives such as a filler, sulfur, a vulcanization accelerator, a sulfur compound, an anti-aging agent, a coloring agent, a plasticizer, and a dispersant. The rubber composition may include a carboxylic acid or a carboxylate. The rubber composition may include synthetic resin powder or crosslinked rubber powder.

The core 4 has a diameter of preferably not less than 30.0 mm, more preferably not less than 37.0 mm, and particularly preferably not less than 38.0 mm. The diameter of the core 4 is preferably not greater than 42.0 mm, more preferably not greater than 41.5 mm, and particularly preferably not greater than 41.0 mm. The core 4 may have two or more layers. The core 4 may have a rib on the surface thereof. The core 4 may be hollow.

The cover 6 is formed from a resin composition. A preferable base polymer for the resin composition is an ionomer resin. Examples of preferable ionomer resins include binary copolymers formed with an $\alpha$-olefin and an $\alpha,\beta$-unsaturated carboxylic acid having 3 to 8 carbon atoms. Examples of other preferable ionomer resins include ternary copolymers formed with: an $\alpha$-olefin; an $\alpha,\beta$-unsaturated carboxylic acid having 3 to 8 carbon atoms; and an $\alpha,\beta$-unsaturated carboxylate ester having 2 to 22 carbon atoms. For the binary copolymers and the ternary copolymers, preferable $\alpha$-olefins are ethylene and propylene, and preferable $\alpha,\beta$-unsaturated carboxylic acids are acrylic acid and methacrylic acid. In the binary copolymers and the ternary copolymers, some of the carboxyl groups are neutralized with metal ions. Examples of metal ions for neutralization include sodium ions, potassium ions, lithium ions, zinc ions, calcium ions, magnesium ions, aluminum ions, and neodymium ions.

The resin composition of the cover 6 may include another polymer instead of or together with an ionomer resin. Examples of the other polymer include polyurethanes, polystyrenes, polyamides, polyesters, and polyolefins. The resin composition may include two or more polymers.

The resin composition of the cover 6 may include a coloring agent such as titanium dioxide, a filler such as barium sulfate, a dispersant, and antioxidant, an ultraviolet absorber, a light stabilizer, a fluorescent material, a fluorescent brightener, etc. For the purpose of specific gravity adjustment, the resin composition may include powder of a metal with a high specific gravity such as tungsten and molybdenum.

The cover 6 has a thickness of preferably not less than 0.3 mm, more preferably not less than 1.0 mm, and particularly preferably not less than 1.5 mm. The thickness of the cover 6 is preferably not greater than 2.5 mm, more preferably not greater than 2.2 mm, and particularly preferably not greater than 2.0 mm. The cover 6 has a specific gravity of preferably not less than 0.90 and not greater than 1.10. The cover 6 may have two or more layers.

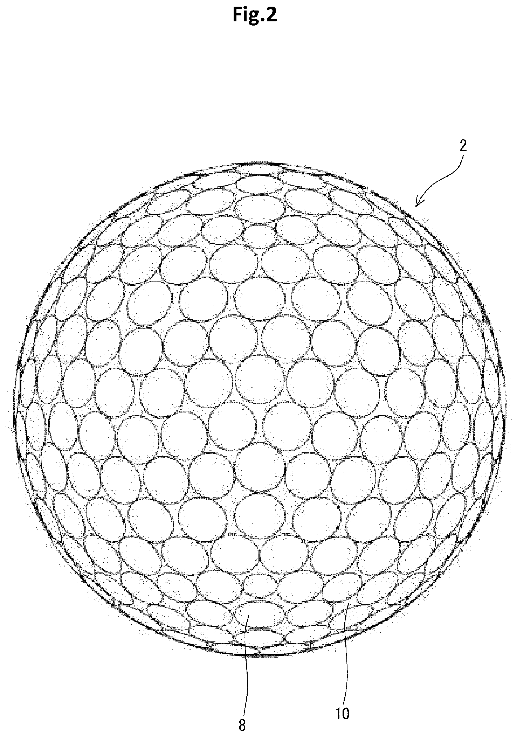

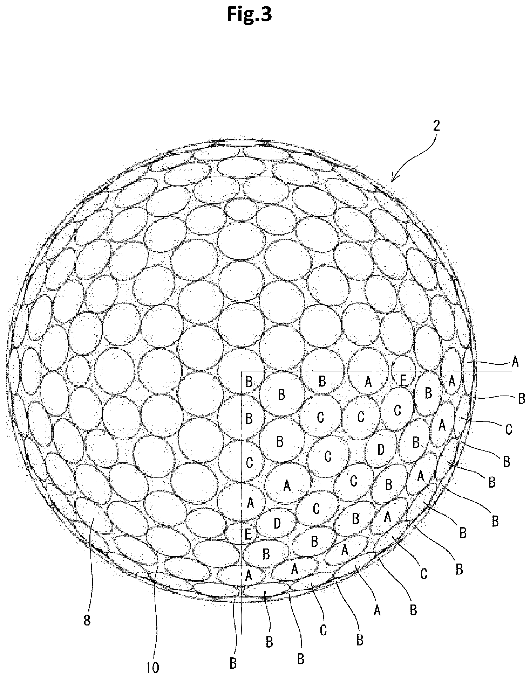

As shown in FIGS. 2 and 3, the contour of each dimple 8 is circular. The golf ball 2 has dimples A each having a diameter of 4.40 mm; dimples B each having a diameter of 4.30 mm; dimples C each having a diameter of 4.15 mm; dimples D each having a diameter of 3.75 mm; and dimples E each having a diameter of 3.00 mm. The number of types of the dimples 8 is five.

The number of the dimples A is 76; the number of the dimples B is 158; the number of the dimples C is 76; the number of the dimples D is 16; and the number of the dimples E is 8. The total number N of the dimples 8 is 334. A dimple pattern is formed by these dimples 8 and the land 10.

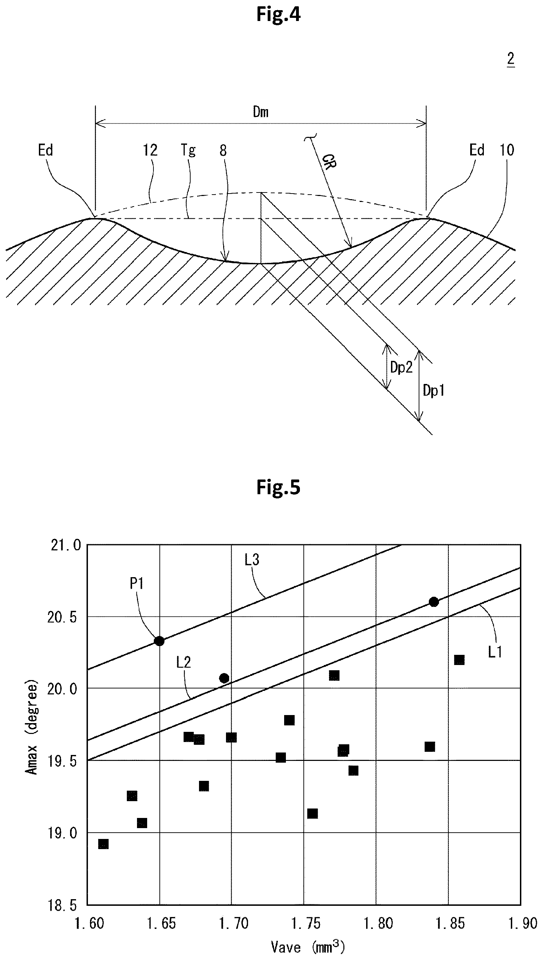

FIG. 4 shows a cross section of the golf ball 2 along a plane passing through the central point of the dimple 8 and the central point of the golf ball 2. In FIG. 4, the up-down direction is the depth direction of the dimple 8. In FIG. 4, a chain double-dashed line 12 indicates a phantom sphere. The surface of the phantom sphere 12 is the surface of the golf ball 2 when it is postulated that no dimple 8 exists. The diameter of the phantom sphere 12 is equal to the diameter of the golf ball 2. The dimple 8 is recessed from the surface of the phantom sphere 12. The land 10 coincides with the surface of the phantom sphere 12. In the present embodiment, the cross-sectional shape of each dimple 8 is substantially a circular arc. The curvature radius of this circular arc is shown by reference character CR in FIG. 4.

In FIG. 4, an arrow Dm indicates the diameter of the dimple 8. The diameter Dm is the distance between two tangent points Ed appearing on a tangent line Tg that is drawn tangent to the opposite ends of the dimple 8. Each tangent point Ed is also the edge of the dimple 8. The edge Ed defines the contour of the dimple 8.

The diameter Dm of each dimple 8 is preferably not less than 2.0 mm and not greater than 6.0 mm. The dimple 8 having a diameter Dm of not less than 2.0 mm contributes to turbulization. From this viewpoint, the diameter Dm is more preferably not less than 2.5 mm and particularly preferably not less than 2.8 mm. The dimple 8 having a diameter Dm of not greater than 6.0 mm does not impair a fundamental feature of the golf ball 2 being substantially a sphere. From this viewpoint, the diameter Dm is more preferably not greater than 5.5 mm and particularly preferably not greater than 5.0 mm.

In FIG. 4, a double headed arrow Dp1 indicates a first depth of the dimple 8. The first depth Dp1 is the distance between the deepest part of the dimple 8 and the surface of the phantom sphere 12. In FIG. 4, a double headed arrow Dp2 indicates a second depth of the dimple 8. The second depth Dp2 is the distance between the deepest part of the dimple 8 and the tangent line Tg.

From the viewpoint of suppression of rising of the golf ball 2 during flight, the first depth Dp1 of each dimple 8 is preferably not less than 0.10 mm, more preferably not less than 0.13 mm, and particularly preferably not less than 0.15 mm. From the viewpoint of suppression of dropping of the golf ball 2 during flight, the first depth Dp1 is preferably not greater than 0.65 mm, more preferably not greater than 0.60 mm, and particularly preferably not greater than 0.55 mm.

The area S of the dimple 8 is the area of a region surrounded by the contour line of the dimple 8 when the central point of the golf ball 2 is viewed at infinity. In the case of a circular dimple 8, the area S is calculated by the following mathematical formula.

$$S = (Dm / 2)^2 * \pi$$

In the golf ball 2 shown in FIGS. 2 and 3, the area of each dimple A is 15.21 mm$^2$; the area of each dimple B is 14.52 mm$^2$; the area of each dimple C is 13.53 mm$^2$; the area of each dimple D is 11.04 mm$^2$; and the area of each dimple E is 7.07 mm$^2$.

In the present specification, the ratio of the sum of the areas S of all the dimples 8 relative to the surface area of the phantom sphere 12 is referred to as an occupation ratio So. From the viewpoint of achieving sufficient turbulization, the occupation ratio So is preferably not less than 78%, more preferably not less than 80%, and particularly preferably not less than 82%. The occupation ratio So is preferably not greater than 95%. In the golf ball 2 shown in FIGS. 2 and 3, the total area of the dimples 8 is 4711.4 mm$^2$. The surface area of the phantom sphere 12 of the golf ball 2 is 5728.0 mm$^2$, so that the occupation ratio So is 82.3%.

From the viewpoint that an appropriate trajectory can be achieved upon a shot with a utility club, the total number N of the dimples 8 is preferably not less than 250 and not greater than 450. The total number N is more preferably not less than 270 and particularly preferably not less than 280. The total number N is more preferably not greater than 410 and particularly preferably not greater than 380.

In the present specification, the "volume V of the dimple" means the volume of a portion surrounded by the surface of the phantom sphere 12 and the surface of the dimple 8. The total volume TV of the dimples 8 is preferably not less than 450 mm$^3$ and not greater than 750 mm$^3$. With the golf ball 2 in which the total volume TV is not less than 450 mm$^3$, rising of the golf ball 2 during flight is suppressed. From this viewpoint, the total volume TV is more preferably not less than 480 mm$^3$ and particularly preferably not less than 500 mm$^3$. With the golf ball 2 in which the total volume TV is not greater than 750 mm$^3$, dropping of the golf ball 2 during flight is suppressed. From this viewpoint, the total volume TV is more preferably not greater than 700 mm$^3$ and particularly preferably not greater than 670 mm$^3$.

In the present specification, an average volume Vave (mm$^3$) of the dimples 8 is calculated by the following mathematical formula.

$$Vave = TV / N$$

From the viewpoint that an appropriate trajectory can be achieved upon a shot with a utility club, the average volume Vave is preferably not less than 1.40 mm$^3$ and not greater than 2.10 mm$^3$. The average volume Vave is more preferably not less than 1.50 mm$^3$ and particularly preferably not less than 1.55 mm$^3$. The average volume Vave is more preferably not greater than 2.00 mm$^3$ and particularly preferably not greater than 1.95 mm$^3$.

In the golf ball 2 shown in FIGS. 2 and 3, the volume of each dimple A is 1.833 mm$^3$, the volume of each dimple B is 1.713 mm$^3$, the volume of each dimple C is 1.545 mm$^3$, the volume of each dimple D is 1.159 mm$^3$, and the volume of each dimple E is 0.637 mm$^3$. Therefore, the total volume TV of the dimples 8 is 551.1 mm$^3$. Since the total number N of the dimples 8 of the golf ball 2 is 334, the average volume Vave is 1.650 mm$^3$.

In the present specification, a drag coefficient CD and a lift force coefficient CL of the golf ball 2 are measured under 15 conditions specified in an indoor test range (ITR) which is a rule set by the United States Golf Association (USGA). A trajectory of the golf ball 2 is calculated, using these drag coefficient CD and lift force coefficient CL, by a program created in accordance with a manual provided by the USGA. The following conditions are also inputted to the program.

Initial ball speed: 260 ft/s (260 feet per second)
Launch angle: 15.0 degrees
Initial backspin rate: 3000 rpm

In this program, a trajectory is calculated on the basis of a model proposed by "S. J. Quintavalla" of the USGA. This model is disclosed in "Science and Golf IV, Chapter 30, A Generally Applicable Model for the Aerodynamic Behavior of Golf Balls" published in 2002.

By calculating the trajectory, a horizontal component Vx of the speed of the golf ball 2 and a vertical component Vy of the speed of the golf ball 2 can be calculated per 0.1 seconds from a launch point to a landing point. A vector angle A is calculated from the horizontal component Vx and the vertical component Vy by the following mathematical formula.

$$A = ATAN(Vy / Vx)$$

In other words, the vector angle A is calculated by an inverse tangent function of a ratio (Vy / Vx). The vector angle A (degree) is obtained per 0.1 seconds from the launch point to the landing point by this calculation. For example, for a trajectory having a flight duration of 5.5 seconds, 55 vector angles A are obtained.

In the present specification, the maximum value among a plurality of vector angles A from a launch point to a landing point is referred to as maximum vector angle Amax (degree). According to the finding by the present inventors, the maximum vector angle Amax influences a trajectory upon a shot with a utility club. From the viewpoint that an appropriate trajectory can be achieved upon a shot with a utility club, the maximum vector angle Amax is preferably not less than 18.50 degrees and not greater than 22.50 degrees. The maximum vector angle Amax is more preferably not less than 19.50 degrees and particularly preferably not less than 20.00 degrees. The maximum vector angle Amax is more preferably not greater than 21.50 degrees and particularly preferably not greater than 21.00 degrees.

FIG. 5 is a graph showing a relationship between the average volume Vave of the dimples 8 and the maximum vector angle Amax. In FIG. 5, a point indicated by reference character P1 is a plot of the golf ball 2 shown in FIGS. 1 to 4.

In FIG. 5, a straight line indicated by reference character L1 is represented by the following mathematical formula.

$$Amax = 4.0 * Vave + 13.10$$

As is obvious from FIG. 5, the point P1 is located above the straight line L1. In other words, the golf ball 2 satisfies the following mathematical formula (1).

$$Amax \geq 4.0 * Vave + 13.10 \qquad (1)$$

In the golf ball 2, the volume V of each dimple 8 is small, and the maximum vector angle Amax is large. According to the finding by the present inventors, a trajectory obtained when the golf ball 2 that satisfies the mathematical formula (1) is hit with a utility club is appropriate. The golf ball 2 has excellent flight performance upon a shot with a utility club.

In FIG. 5, a straight line indicated by reference character L2 is represented by the following mathematical formula.

$$Amax = 4.0 * Vave + 13.24$$

As is obvious from FIG. 5, the point P1 is located above the straight line L2. In other words, the golf ball 2 satisfies the following mathematical formula (2).

$$Amax \geq 4.0 * Vave + 13.24 \qquad (2)$$

In the golf ball 2, the volume V of each dimple 8 is small, and the maximum vector angle Amax is large. According to the finding by the present inventors, a trajectory obtained when the golf ball 2 that satisfies the mathematical formula (2) is hit with a utility club is appropriate. The golf ball 2 has excellent flight performance upon a shot with a utility club.

In FIG. 5, a straight line indicated by reference character L3 is represented by the following mathematical formula.

$$Amax = 4.0 * Vave + 13.73$$

As is obvious from FIG. 5, the point P1 is located on the straight line L3. In other words, the golf ball 2 satisfies the following mathematical formula (3).

$$Amax \geq 4.0 * Vave + 13.73 \qquad (3)$$

In the golf ball 2, the volume V of each dimple 8 is small, and the maximum vector angle Amax is large. According to the finding by the present inventors, a trajectory obtained when the golf ball 2 that satisfies the mathematical formula (3) is hit with a utility club is appropriate. The golf ball 2 has excellent flight performance upon a shot with a utility club.

For the golf ball 2 on the straight line L1, a value (Amax - 4.0 * Vave) is 13.10. For the golf ball 2 on the straight line L2, the value (Amax - 4.0 * Vave) is 13.24. For the golf ball 2 on the straight line L3, the value (Amax - 4.0 * Vave) is 13.73. From the viewpoint of flight performance upon a shot with a utility club, the value (Amax - 4.0 * Vave) is preferably not less than 13.10, more preferably not less than 13.24, and particularly preferably not less than 13.73.

EXAMPLES

Hereinafter, the advantageous effects of golf balls according to Examples will be shown, but the scope disclosed in the present specification should not be construed in a limited manner on the basis of the description of these Examples.

[Example 1]

A rubber composition was obtained by kneading 100 parts by mass of a polybutadiene (trade name "BR-730", manufactured by JSR Corporation), 30 parts by mass of zinc acrylate, 6 parts by mass of zinc oxide, 10 parts by mass of barium sulfate, 0.5 parts by mass of diphenyl disulfide, and 0.5 parts by mass of dicumyl peroxide. This rubber composition was placed into a mold including upper and lower mold halves each having a hemispherical cavity, and heated at 170°C for 18 minutes to obtain a core having a diameter of 39.7 mm. Meanwhile, a resin composition was obtained by kneading 50 parts by mass of an ionomer resin (trade name "Himilan 1605", manufactured by DOW-MITSUI POLYCHEMICALS COMPANY, LTD.), 50 parts by mass of another ionomer resin (trade name "Himilan 1706", manufactured by DOW-MITSUI POLYCHEMICALS COMPANY, LTD.), and 3 parts by mass of titanium dioxide. The above core was placed into a final mold having a large number of pimples on the inside face thereof, and the above resin composition was injected around the core by injection molding to form a cover having a thickness of 1.5 mm. A large number of dimples having a shape that is the inverted shape of the pimples were formed on the cover. A clear paint including a two-component curing type polyurethane as a base material was applied to this cover to obtain a golf ball of Example 1 having a diameter of about 42.7 mm and a mass of about 45.4 g. The golf ball has a PGA compression of about 85. The golf ball has the dimple pattern shown in FIGS. 2 and 3. The specifications of the dimples are shown in detail in Table 1 below.

[Example 2 and Comparative Examples 1 and 2]

Golf balls of Example 2 and Comparative Examples 1 and 2 were obtained in the same manner as Example 1, except that the final mold was changed. Each of these golf balls has the dimple pattern shown in FIGS. 2 and 3. The specifications of the dimples of these golf balls are shown in Tables 2 to 4 below.

[Example 3]

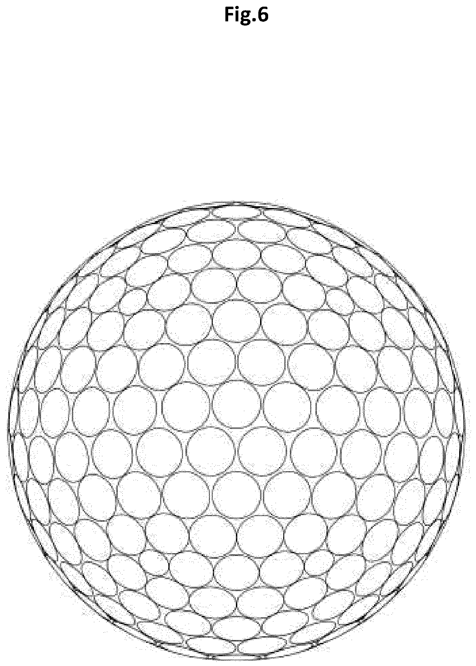

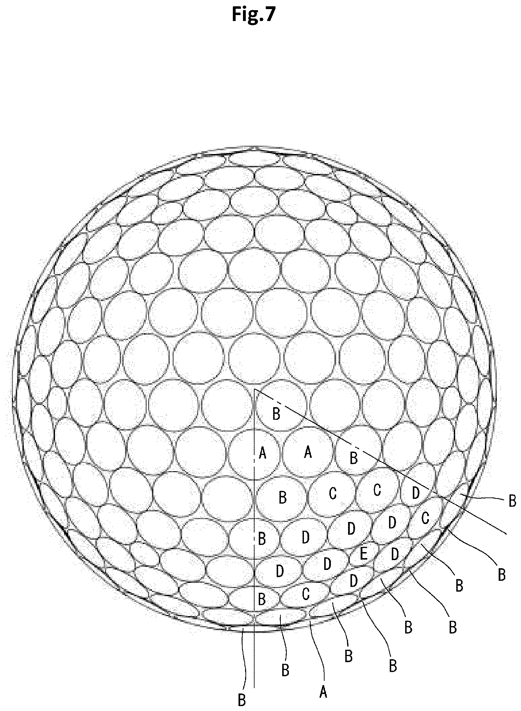

A golf ball of Example 3 was obtained in the same manner as Example 1, except that the final mold was changed. The dimple pattern of this golf ball is shown in FIGS. 6 and 7. The specifications of the dimples of this golf ball are shown in Table 5 below.

[Comparative Examples 3 to 16]

Commercially available golf balls were prepared as Comparative Examples 3 to 16.

[Flight Test]

A utility club (trade name "XXIO-12 Hybrid H#3", manufactured by Sumitomo Rubber Industries, Ltd., shaft hardness: S, loft angle: 18°) was attached to a swing machine manufactured by Golf Laboratories, Inc. A golf ball was hit under a condition of a head speed of 41.5 m/sec, and the flight distance was measured. The flight distance is the distance from the hitting spot to the spot at which the golf ball stopped. The measurement was conducted 12 times, and the average value of the obtained data was calculated. The results are shown in Tables 6 to 9 below.

[Table 1]

Table 1 Specifications of Dimples Example 1

|   | Number | Dm (mm) | Dp2 (mm) | Dp1 (mm) | CR (mm) | V (mm$^3$) | Total (mm$^3$) |
|---|---|---|---|---|---|---|---|
| A | 76 | 4.40 | 0.1272 | 0.2409 | 19.09 | 1.833 | 139.3 |
| B | 158 | 4.30 | 0.1272 | 0.2357 | 18.23 | 1.713 | 270.7 |
| C | 76 | 4.15 | 0.1272 | 0.2283 | 16.99 | 1.545 | 117.5 |
| D | 16 | 3.75 | 0.1272 | 0.2097 | 13.88 | 1.159 | 18.5 |
| E | 8 | 3.00 | 0.1272 | 0.1800 | 8.91 | 0.637 | 5.1 |
|   | 334 |  |  |  |  |  | 551.1 |

[Table 2]

Table 2 Specifications of Dimples Example 2

|   | Number | Dm (mm) | Dp2 (mm) | Dp1 (mm) | CR (mm) | V (mm$^3$) | Total (mm$^3$) |
|---|---|---|---|---|---|---|---|
| A | 76 | 4.40 | 0.1336 | 0.2473 | 18.18 | 1.882 | 143.0 |
| B | 158 | 4.30 | 0.1336 | 0.2421 | 17.37 | 1.760 | 278.1 |
| C | 76 | 4.15 | 0.1336 | 0.2347 | 16.18 | 1.589 | 120.8 |
| D | 16 | 3.75 | 0.1336 | 0.2161 | 13.22 | 1.195 | 19.1 |
| E | 8 | 3.00 | 0.1336 | 0.1864 | 8.49 | 0.660 | 5.3 |
|   | 334 |  |  |  |  |  | 566.3 |

[Table 3]

Table 3 Specifications of Dimples Comparative Example 1

|   | Number | Dm (mm) | Dp2 (mm) | Dp1 (mm) | CR (mm) | V (mm$^3$) | Total (mm$^3$) |
|---|---|---|---|---|---|---|---|
| A | 76 | 4.40 | 0.1399 | 0.2536 | 17.37 | 1.930 | 146.7 |
| B | 158 | 4.30 | 0.1399 | 0.2484 | 16.59 | 1.806 | 285.3 |
| C | 76 | 4.15 | 0.1399 | 0.2410 | 15.46 | 1.632 | 124.0 |
| D | 16 | 3.75 | 0.1399 | 0.2224 | 12.63 | 1.230 | 19.7 |
| E | 8 | 3.00 | 0.1399 | 0.1927 | 8.11 | 0.682 | 5.5 |
|   | 334 |   |   |   |   |   | 581.2 |

[Table 4]

Table 4 Specifications of Dimples Comparative Example 2

|   | Number | Dm (mm) | Dp2 (mm) | Dp1 (mm) | CR (mm) | V (mm$^3$) | Total (mm$^3$) |
|---|---|---|---|---|---|---|---|
| A | 76 | 4.40 | 0.1462 | 0.2599 | 16.63 | 1.978 | 150.3 |
| B | 158 | 4.30 | 0.1462 | 0.2547 | 15.88 | 1.852 | 292.6 |
| C | 76 | 4.15 | 0.1462 | 0.2473 | 14.80 | 1.675 | 127.3 |
| D | 16 | 3.75 | 0.1462 | 0.2287 | 12.10 | 1.265 | 20.2 |
| E | 8 | 3.00 | 0.1462 | 0.1990 | 7.77 | 0.705 | 5.6 |
|   | 334 |   |   |   |   |   | 596.1 |

[Table 5]

Table 5 Specifications of Dimples Example 3

|   | Number | Dm (mm) | Dp2 (mm) | Dp1 (mm) | CR (mm) | V (mm$^3$) | Total (mm$^3$) |
|---|---|---|---|---|---|---|---|
| A | 30 | 4.70 | 0.1170 | 0.2467 | 23.66 | 2.142 | 64.3 |
| B | 132 | 4.60 | 0.1170 | 0.2412 | 22.67 | 2.007 | 264.9 |
| C | 48 | 4.50 | 0.1170 | 0.2359 | 21.69 | 1.878 | 90.1 |
| D | 90 | 4.30 | 0.1170 | 0.2255 | 19.81 | 1.639 | 147.5 |
| E | 12 | 3.00 | 0.1170 | 0.1698 | 9.67 | 0.601 | 7.2 |
|   | 312 |   |   |   |   |   | 574.0 |

[Table 6]

Table 6 Evaluation Results

|   | Example 1 | Example 2 | Comparative Example 1 | Comparative Example 2 | Example 3 |
|---|---|---|---|---|---|
| Front view | FIG. 2 | FIG. 2 | FIG. 2 | FIG. 2 | FIG. 6 |
| Plan view | FIG. 3 | FIG. 3 | FIG. 3 | FIG. 3 | FIG. 7 |
| N | 334 | 334 | 334 | 334 | 312 |
| TV (mm$^3$) | 551.1 | 566.3 | 581.2 | 596.1 | 574.0 |
| Vave (mm$^3$) | 1.650 | 1.695 | 1.740 | 1.785 | 1.840 |
| Amax (deg.) | 20.33 | 20.07 | 19.78 | 19.43 | 20.60 |

(continued)

|  | Example 1 | Example 2 | Comparative Example 1 | Comparative Example 2 | Example 3 |
|---|---|---|---|---|---|
| Amax - 4.0 * Vave | 13.73 | 13.29 | 12.82 | 12.29 | 13.24 |
| Flight distance (m) | 196.0 | 195.0 | 193.5 | 191.5 | 194.7 |

[Table 7]

Table 7 Evaluation Results

|  | Comparative Example 3 | Comparative Example 4 | Comparative Example 5 | Comparative Example 6 | Comparative Example 7 |
|---|---|---|---|---|---|
| Front view | - | - | - | - | - |
| Plan view | - | - | - | - | - |
| N | 348 | 352 | 328 | 352 | 346 |
| TV (mm$^3$) | 570.1 | 591.7 | 583.2 | 567.2 | 564.4 |
| Vave (mm$^3$) | 1.638 | 1.681 | 1.778 | 1.611 | 1.631 |
| Amax (deg.) | 19.07 | 19.32 | 19.58 | 18.93 | 19.26 |
| Amax - 4.0 * Vave | 12.52 | 12.60 | 12.47 | 12.48 | 12.73 |
| Flight distance (m) | 193.1 | 193.0 | 192.1 | 193.2 | 193.3 |

[Table 8]

Table 8 Evaluation Results

|  | Comparative Example 8 | Comparative Example 9 | Comparative Example 10 | Comparative Example 11 | Comparative Example 12 |
|---|---|---|---|---|---|
| Front view | - | - | - | - | - |
| Plan view | - | - | - | - | - |
| N | 330 | 330 | 338 | 338 | 338 |
| TV (mm$^3$) | 586.5 | 572.4 | 567.2 | 574.6 | 593.6 |
| Vave (mm$^3$) | 1.777 | 1.735 | 1.678 | 1.700 | 1.756 |
| Amax (deg.) | 19.57 | 19.52 | 19.65 | 19.66 | 19.14 |
| Amax - 4.0 * Vave | 12.46 | 12.58 | 12.94 | 12.86 | 12.11 |
| Flight distance (m) | 192.2 | 192.9 | 194.1 | 193.8 | 191.3 |

[Table 9]

Table 9 Evaluation Results

| | Comparative Example 13 | Comparative Example 14 | Comparative Example 15 | Comparative Example 16 |
|---|---|---|---|---|
| Front view | - | - | - | - |
| Plan view | - | - | - | - |
| N | 326 | 332 | 332 | 332 |
| TV (mm$^3$) | 605.7 | 610.1 | 554.7 | 588.0 |
| Vave (mm$^3$) | 1.858 | 1.838 | 1.671 | 1.771 |
| Amax (deg.) | 20.20 | 19.60 | 19.66 | 20.09 |
| Amax - 4.0 * Vave | 12.77 | 12.25 | 12.98 | 13.01 |
| Flight distance (m) | 192.8 | 191.1 | 194.2 | 194.0 |

As shown in Tables 6 to 9, the golf ball of each Example has excellent flight performance upon a shot with a utility club. From the evaluation results, advantages of this golf ball are clear.

[Disclosure Items]

Each of the following items is the disclosure of a preferred embodiment.

[Item 1]

A golf ball having a plurality of dimples on a surface thereof, wherein a trajectory calculated using a drag coefficient CD and a lift force coefficient CL obtained in an indoor test range which is a rule set by the United States Golf Association, on the basis of a model proposed by S. J. Quintavalla of the United States Golf Association and disclosed in "Science and Golf IV, Chapter 30, A Generally Applicable Model for the Aerodynamic Behavior of Golf Balls" published in 2002, by a program created in accordance with a manual provided by the United States Golf Association, under conditions of an initial speed of 260 ft/s, a launch angle of 15.0 degrees, and an initial backspin rate of 3000 rpm, satisfies the following mathematical formula,

$$Amax \geq 4.0 * Vave + 13.10,$$

wherein Amax represents a maximum value (degree) of a vector angle A in the trajectory, and Vave represents an average volume (mm$^3$) of the dimples, and the vector angle A is calculated by the following mathematical formula,

$$A = ATAN(Vy / Vx),$$

wherein Vx represents a horizontal component of a speed of the golf ball, and Vy represents a vertical component of the speed of the golf ball.

[Item 2]

The golf ball according to Item 1, wherein a total number of the dimples is not less than 280 and not greater than 380.

[Item 3]

The golf ball according to Item 1 or 2, wherein the average volume Vave is not less than 1.40 mm$^3$ and not greater than 2.10 mm$^3$.

[Item 4]

A golf ball having a plurality of dimples on a surface thereof, wherein

a value (Amax - 4.0 * Vave) in a trajectory calculated using a drag coefficient CD and a lift force coefficient CL obtained in an indoor test range which is a rule set by the United States Golf Association, on the basis of a model proposed by S. J. Quintavalla of the United States Golf Association and disclosed in "Science and Golf IV, Chapter 30, A Generally Applicable Model for the Aerodynamic Behavior of Golf Balls" published in 2002, by a program created in accordance with a manual provided by the United States Golf Association, under conditions of an initial speed of 260 ft/s, a launch angle of 15.0 degrees, and an initial backspin rate of 3000 rpm, is not less than 13.10, Vave being an average volume ($mm^3$) of the dimples,
Amax being a maximum value (degree) of a vector angle A calculated by the following mathematical formula, in the trajectory,

$$A = ATAN(Vy / Vx),$$

wherein Vx represents a horizontal component of a speed of the golf ball, and Vy represents a vertical component of the speed of the golf ball.

The above-described golf ball is suitable for, for example, playing golf on golf courses and practicing at driving ranges.

**Claims**

1. A golf ball (2) having a plurality of dimples (8) on a surface thereof, wherein a trajectory calculated using a drag coefficient CD and a lift force coefficient CL obtained in an indoor test range which is a rule set by the United States Golf Association, on the basis of a model proposed by S. J. Quintavalla of the United States Golf Association and disclosed in "Science and Golf IV, Chapter 30, A Generally Applicable Model for the Aerodynamic Behavior of Golf Balls" published in 2002, by a program created in accordance with a manual provided by the United States Golf Association, under conditions of an initial speed of 260 ft/s, a launch angle of 15.0 degrees, and an initial backspin rate of 3000 rpm, satisfies the following mathematical formula,

$$Amax \geq 4.0 * Vave + 13.10,$$

wherein Amax represents a maximum value (degree) of a vector angle A in the trajectory, and
Vave represents an average volume ($mm^3$) of the dimples (8), and
the vector angle A is calculated by the following mathematical formula,

$$A = ATAN(Vy / Vx),$$

wherein Vx represents a horizontal component of a speed of the golf ball (2), and Vy represents a vertical component of the speed of the golf ball (2).

2. The golf ball (2) according to claim 1, wherein a total number (N) of the dimples (8) is not less than 280 and not greater than 380.

3. The golf ball (2) according to claim 1 or 2, wherein the average volume Vave is not less than 1.40 $mm^3$ and not greater than 2.10 $mm^3$.

**Fig.1**

**Fig.2**

# Fig.3

# Fig.4

# Fig.5

Fig.6

# Fig.7

Europäisches
Patentamt

European
Patent Office

Office européen
des brevets

# EUROPEAN SEARCH REPORT

**Application Number**

EP 23 15 1354

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2003 210613 A (SUMITOMO RUBBER IND) 29 July 2003 (2003-07-29) * last sentence; paragraph [0016] * * paragraph [0030] * ----- | 1-3 | INV. A63B37/00 ADD. A63B47/00 A63B24/00 |

| | |
|---|---|
| TECHNICAL FIELDS SEARCHED (IPC) | |
| A63B | |

The present search report has been drawn up for all claims

| Place of search | Date of completion of the search | Examiner |
|---|---|---|
| Munich | 24 May 2023 | Tejada Biarge, Diego |

EPO FORM 1503 03.82 (P04C01)

## ANNEX TO THE EUROPEAN SEARCH REPORT
## ON EUROPEAN PATENT APPLICATION NO.

EP 23 15 1354

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2023

| Patent document cited in search report | | Publication date | Patent family member(s) | | Publication date |
|---|---|---|---|---|---|
| JP 2003210613 | A | 29-07-2003 | JP | 2003210613 A | 29-07-2003 |
| | | | US | 2003134696 A1 | 17-07-2003 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2014140638 A

**Non-patent literature cited in the description**

• **S. J. QUINTAVALLA.** Science and Golf IV, Chapter 30, A Generally Applicable Model for the Aerodynamic Behavior of Golf Balls. United States Golf Association, 2002
• A Generally Applicable Model for the Aerodynamic Behavior of Golf Balls. Science and Golf IV. 2002
• A Generally Applicable Model for the Aerodynamic Behavior of Golf Balls. **S. J. QUINTAVALLA.** Science and Golf IV. United States Golf Association, 2002